(19) Europäisches Patentamt
European Patent Office
Office européen des brevets

(11) **EP 1 025 436 B1**

(12) **EUROPÄISCHE PATENTSCHRIFT**

(45) Veröffentlichungstag und Bekanntmachung des Hinweises auf die Patenterteilung:
**11.08.2004 Patentblatt 2004/33**

(21) Anmeldenummer: **98956831.6**

(22) Anmeldetag: **21.09.1998**

(51) Int Cl.$^7$: **G01N 29/02**

(86) Internationale Anmeldenummer:
**PCT/EP1998/006011**

(87) Internationale Veröffentlichungsnummer:
**WO 1999/021001 (29.04.1999 Gazette 1999/17)**

(54) **SAW SENSOR**

SURFACE ACOUSTIC WAVE SENSOR

DETECTEUR A ONDES ACOUSTIQUES DE SURFACE

(84) Benannte Vertragsstaaten:
**AT BE CH DE DK ES FR GB IE IT LI NL PT SE**

(30) Priorität: **20.10.1997 DE 19746261**

(43) Veröffentlichungstag der Anmeldung:
**09.08.2000 Patentblatt 2000/32**

(73) Patentinhaber: **Forschungszentrum Karlsruhe GmbH**
**76133 Karlsruhe (DE)**

(72) Erfinder:
• **RAPP, Michael**
  **D-69214 Eppelheim (DE)**
• **VOIGT, Achim**
  **D-76351 Linkenheim-Hochstetten (DE)**

(56) Entgegenhaltungen:
**EP-A- 0 542 469**     **EP-A- 0 618 446**
**EP-A- 0 750 192**     **WO-A-93/07463**
**US-A- 5 076 094**     **US-A- 5 117 146**

**Beschreibung**

Die Erfindung betrifft eine Sensor nach dem Oberbegriff des Patentanspruchs 1, wie er aus der DE 44 17 170 bekannt ist.

Modifizierte akustische Oberflächenwellen oder Surface Acoustic Wave (SAW) Bauelemente können für die chemische Sensorik von Gasen oder Flüssigkeiten eingesetzt werden, indem man sie mit einer entsprechend chemisch reaktiven Beschichtungen versieht. Bei der Ab- oder Adsorption des Analyten verändern sich die Masse der Beschichtung sowie deren elastische Parameter, wodurch sich die Schallgeschwindigkeit der Oberflächenwelle ebenfalls verändert. Um die Änderung der Schallgeschwindigkeit einer Oberflächenwelle möglichst exakt und trotzdem einfach zu messen ist es üblich, ein beschichtetes SAW-Bauelement als frequenzbestimmendes Element einer Oszillatorschaltung zu schalten.

Aus der Schallgeschwindigkeitsänderung ergibt sich eine in guter Näherung proportionale Änderung der Oszillationsfrequenz, welche mit einer hohen Auflösung von typischerweise $10^{-6}$ gemessen werden kann. Durch eine entsprechende Wahl von Sorptionsschichten lassen sich mit dieser Technik eine nahezu beliebige Vielzahl von gasförmigen Analyten untersuchen. Hauptinteresse finden hierbei solche Stoffe, die mit anderen chemischen Mikrosensoren nur schwer einer qualitativen und quantitativen Bestimmung zugänglich sind: Organische Lösungsmittel, wie beispielsweise Kohlenwasserstoffe (Hexan, Oktan, Decan, versch. Kraftstoffe), Alkohole (Methanol, Ethanol), halogenierte Kohlenwasserstoffe (CKW's, FCKW's) und Aromaten (Benzol, Toluol).

Aus der EP 0 509 328 A2 ist eine Anordnung von 3 SAW bekannt, die jedoch hinter einander angeordnet sind. Dies führt zu unterschiedlichen Strömungsverhältnissen in den einzelnen Sensoren.

Desweiteren ist aus der EP 0 477 648 A1 eine Anordnung von mehr als 2 SAW mit unterschiedlicher Beschichtung bekannt. Eine besondere Anordnung der Sensoren ist hier nicht vorgesehen.

Werden mehrere Oszillatoren bei annähernd gleicher Frequenz auf engem Raum betrieben, so werden sie sich gegenseitig durch das elektromagnetische Übersprechen stark beeinflussen. Dies kann im Extremfall zum "Einlocken" führen. (Oszillatoren schwingen auf derselben Frequenz). Dieses Verhalten beschränkt die Möglichkeit der Miniaturisierung von HF-Oszillatoren bei ähnlicher Frequenz. Dieses Problem kann umgangen werden, wenn man die Oszillatoren ein- und ausschaltet. Beim Wiedereinschalten der Oszillatoren driften diese aufgrund thermischer Veränderungen, wodurch die Meßempfindlichkeit eines e. g. Sensors verringert wird. Um dies zu vermeiden müßte man nach jeder Wiedereinschaltung so lange warten, bis sich ein thermisches Gleichgewicht eingestellt hat. Dies führt jedoch zu einer sehr langen Totzeit.

Aufgabe der Erfindung ist es, einen Sensor der e. g. Art zur Verfügung zu stellen, bei dem ein Übersprechen der Oszillatoren vermieden wird, ohne Empfindlichkeitsverluste und längere Totzeiten.

Gelöst wird diese Aufgabe durch die Merkmale des Patentanspruchs 1. Die Unteransprüche beschreiben vorteilhafte Ausgestaltungen des Sensors.

Der besondere Vorteil der Erfindung besteht darin, dämfungstolerante Oszillatoren (hohe Verstärkung des aktiven Bauteils) mit einstellbarer Phase (Phasenschieber mittels Spule und Kapazitätsdioden) mit der Möglichkeit des Ausschaltens des Oszillators zu kombinieren. Dies eröffnet die Möglichkeit innerhalb der gesamten Sensorik mittels Oszillatorprinzipien, auf eine elektromagnetische Trennung der Sensorkammern zu verzichten, da die Oszillatoren gemultiplext und gleichzeitig bei ihrem optimalen Phasenpunkt betrieben werden können.

Diese Art der Beschaltung eröffnet ein hohes Potential der Miniaturisierung von Sensor Oszillatoren Arrays (BAW(QMB), SAW, Kapazitive Oszillatorprinzipien) und durch die Wahl des optimalen Arbeitspunktes der Oszillatoren (Phase) und damit gleichzeitig eine Erhöhung der Empfindlichkeit.

Vor den Verstärker Ein- oder Ausgang eines Oszillators wird ein mittels Kapazitätsdioden elektrisch einstellbarer Phasenschieber geschaltet. Durch Anlegen einer definierten Spannung erreicht man nun, daß der Oszillator bei einer definierten Phasenbedingung schwingt. D.h. man kann sich auf den für die jeweilige Aufgabe optimalen Phasenpunkt des passiven Rückkopplungsbauteils setzen oder durch eine starke Verstimmung des Phasenschiebers mit der angelegten Spannung, ganz aus dem Übertragungsbereich des passiven Bauelementes gehen. Die Phasenbedingung zur Oszillation ist dann nicht mehr erfüllt und sie bricht ab. Dasselbe "schaltende" Verhalten könnte man mit PIN-Dioden erreichen.

Ein ähnliches Prinzip wird bei quarzstabilisierten VCO's (Voltage Controlled Oszillatoren) angewendet. Dabei wird allerdings nur die Phase geschoben, aber nicht der Oszillator geschaltet.

Die Erfindung wird im folgenden anhand eines Ausführungsbeispiels mit Hilfe der Figuren näher erläutert.

Dabei zeigt die Fig. 1 das Prinzip eines Sensors und die Fig. 2 das Beispiel eines Oszillatorverstärkers. Die Fig. 3 zeigt das Transmissionsverhalten eines Oberflächenwellen- Bauelements (SAW).

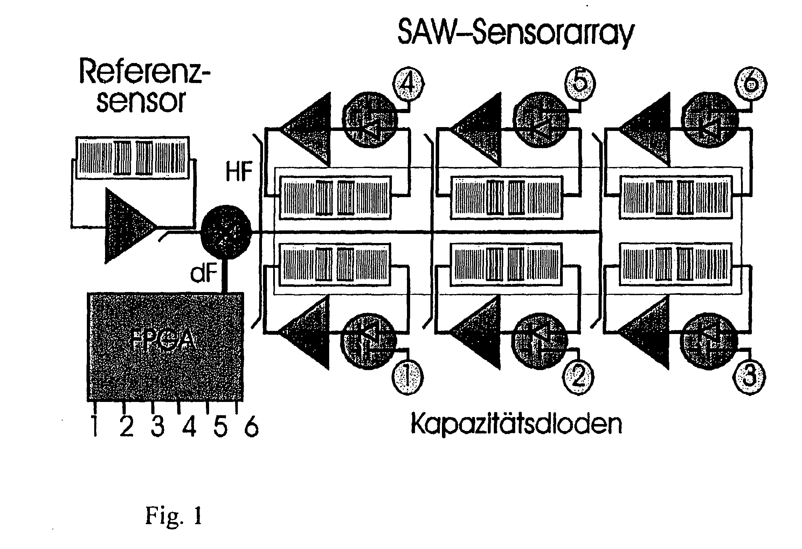

Fig. 1 zeigt das Prinzip eines miniaturisierten Sensorkopfes mittels getrennt ansteuerbaren Oszillatoren.

Eine mikroelektronische Schaltung, hier ein FPGA (free programmable gate array), liefert an den Ausgängen 1..6 jeweils die Signale für die Ansteuerung der Kapazitätsdioden. der 6 Meßoszillatoren, die jeweils aus SAW und Oszillatorschaltung bestehen. Ferner beinhaltet er einen mit dem jeweiligen Kanal zeitlich synchronisierten schnellen Zähler. Das einzelnen HF-Signal des jeweils aktiven Oszillators wird mit einem permanent schwingenden Referenzoszillator abwärts gemischt und das niederfrequente Differenzsignal (dF) dem FPGA-Zähler zugeführt.

So kann nacheinander durch Ein- und Ausschalten der einzelnen Oszillatoren die jeweilige Schwingungsfrequenz der SAWs gemessen werden. Das zu untersuchende Medium wird durch hier nicht dargestellteKanäle seriell oder parallel den einzelnen SAW's zugeleitet.

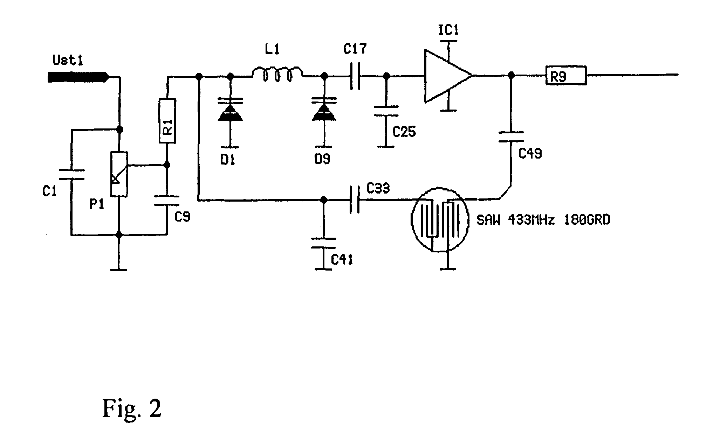

Fig. 2 zeigt den Schaltplan des in Entwicklung befindlichen Prototypen eines SAW- Arrays.

Es ist deutlich das π-Phasenschiebernetzwerk am Eingang der jeweiligen Oszillatorverstärker zu erkennen. Mittels der Potentiometer wird die optimale Phase der Oszillationskreise eingestellt und durch Ein und Ausschalten der konstanten Steuerspannungen (Ust x) die jeweiligen Oszillatoren geschaltet.

Im Schaltbild von Fig. 2 erfolgt die Ausführung des Phasenschiebers in unserem Oszillator als Tiefpaß LC-, PI-Filter, bei dem die Eckfrequenz mittels Kapazitätsdioden verstimmt wird.

Der Phasenschieber kann auch mittels Pin Dioden, RC, RL, LC Glieder realisiert werden.

Die Beschaltung erfolgt als Hoch-, Tief-, Allpass- oder Resonanzkreis.

C1, C9 mit R1 und P1 wirken als Tiefpaß und dienen zur Entkopplung der Hochfrequenz des

Oszillators auf den Spannungseingang Ustl. An Ust1 liegt der Schaltimpuls zur Ein- und -Ausschaltung des Oszillators.

Mittels Trimmer P1 kann die Ansteuerspannung des Phasenschiebers, bestehend aus dem LC π-Tiefpaß D1, D9, L1, C41, C25 eingestellt, und somit die Phasenlage des Oszillators auf optimale Sensivität des SAW Sensors justiert werden.

C17, C33 und C49 dienen zur Gleichspannungsentkopplung der Gleichspannungen von der Hochfrequenzspannnung.

Über R9 bekommt der Hochfrequenzverstärker IC1 seinen Betriebsstrom. Gleichzeitig wird über R9 die Oszillatorfrequenz hochohmig ausgekoppelt.

Statt des SAWs (433 Mhz, 180°Phase) kann ein beliebiges anderes frequenzbestimmendes passives Bauteil (z. B. Schwingquarz, 0° Phasenlage) oder LC-Glied verwendet werden. In diesem Fall muß ein anderer Verstärker für IC1 gewählt werden. Der Verstärker muß in seiner Phasenlage dem passiven Bauteil im Rückkopplungszweig angepaßt werden, um die Phasenbedingung zur Oszillation im Einstellbereich des Phasenschiebers zu gewährleisten.

In unserem Sensorkopf werden 8 Sensoren nacheinander gemultiplext und die einzelnen

Hochfrequenzen mit dem kontinuierlich schwingendem Referenzsensor abwärtsgemischt.

Die relativ niederfrequenten Mischfrequenzen können dann über einen schnellen Digitalzähler, z. B.

einen reziproken Zähler, weiterverarbeitet werden.

Durch diese Anordnung von geschalteten Oszillatoren lassen sich die Sensoren räumlich dicht anordnen, wodurch eine bedeutende Miniaturisierung erreicht wird. Dies erlaubt auch das Messvolumen erheblich zu miniaturisieren, was für viele Anwendungen in der chemischen Analytik von Vorteil ist.

Bei einer serielle Beprobung der Sensoren kann bei gleicher Gasdurchflußbedingungen das Meßvolume noch zuätzlich reduziert werden, da dann ein un derselbe Gasstrom alle Sensoren im Sensorkopf erreicht. Ein geringer Nachteil ist dabei der von Strömungsgeschwindigkeit und Leitungslänge abhängige zeitliche Versatz der Sensorsignale. (In unserem Sensorkopf ca. 1s zwischen Sensor 1 und Sensor 8). Läßt man die Richtung des gemultiplexten Ansteuerung des Sensorkopfes mit der Strömungsrichtung des Gases laufen, lassen sich die unterschiedlichen Zeitoffsets bei einer entsprechenden Wahl der Strömungsgeschwindigkeit ausgleichen und man erhält von allen Sensoren simultan ansprechende. Dies ist wichtig, damit die Auswertesoftware die Anstiegsdynamik der Sensorsignale online im Sekundentakt verarbeiten kann.

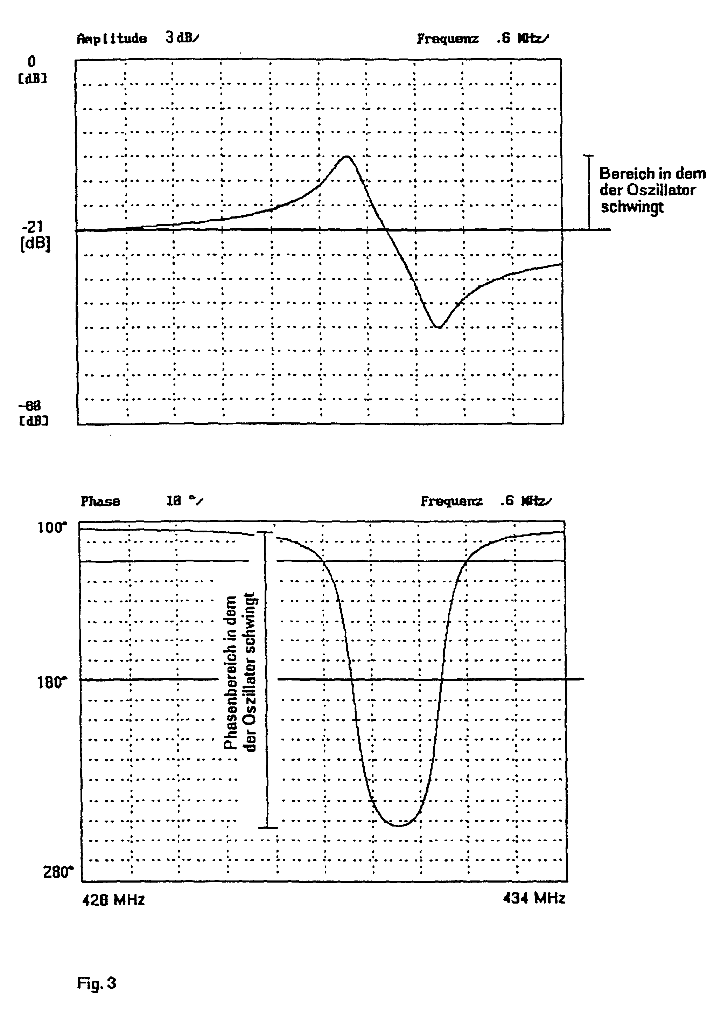

Fig. 3 zeigt das typische Transmissionsverhalten der von uns verwendeten SAW Bauelemente. Oben ist der Amplitudengang und unten der Phasengang mit der Frequenz dargestellt.

Damit nun ein Oszillator sicher anschwingt müssen 2 Bedingungen erfüllt sein.

1) *Amplitudenbedingung:* Sie besagt daß ein Oszillator nur dann schwingen kann, wenn der Verstärker die Abschwächung des passiven Bauteils im Rückkopplungszweig aufhebt.

$$V_{Verstärker} * V_{passives\ BE} \geq 1$$

2) *Phasenbedingung*: Sie besagt, daß eine Schwingung nur dann zustande kommen kann wenn die Gesamtphase im Oszillatorkreis $n*2\pi$ beträgt.

$$\varphi_{Verstärker} + \varphi_{passives\ BE} = n * 2\pi \quad n \in (0,1,2..)$$

Unser verwendete Verstärker besitzt eine Verstärkung von ca. 21 dB. Dies bedeutet daß man mit passiven Bauelementen mit einer Dämpfung von bis zu -21 dB den Oszillator sicher zum Schwingen bekommt.

Durch die Verwendung eines elektrisch ansteuerbaren Phasenschiebers im Oszillatorkreis kann man den Phasenpunkt der Oszillation und damit die Oszillationsfrequenz innerhalb der Transmissionskurve des passiven Bauelementes wählen. Zusätzlich kann man den Oszillatorkreis so verstimmen, daß die Amplituden oder Phasenbedingungen nicht mehr erfüllt werden und die Oszillation aussetzt.

Würde man das aktive Bauteil in unserem Oszillator Ein und Ausschalten so ergäbe sich durch die Leistungsaufnahme und Wärmekapazität des SMD Bauteils eine starke Drift von ca.1..10kHz/s beim Einschalten des Oszillators. Diese Drift würde unser Grundrauschen von ca. 30 Hz um den Faktor 30 bis über 300-fach verschlechtern. Um diese Faktoren würden sich auch die Nachweisempfindlichkeiten der Sensoren ändern.

Läßt man dagegen das aktive Bauelement eingeschaltet und verschiebt mittels Phasenschieber die Phase im Oszillationskreis so daß die Oszillation abbricht oder wieder einsetzt so erreichen wir eine entsprechend schnelle Einschwingzeit, daß diese bei einer Messzeit von 1s im Grundrauschen (30 Hz) verschwindet. Die gemessene Ein und Ausschwingzeit für den so geschalteten Oszillator liegt bei etwa 200 µs.

## Patentansprüche

1. Sensor bestehend aus mindestens zwei schwingungsfähigen passiven Bauelementen mit dazugehörigen Oszillatorschaltungen als Meßoszillatoren in einem Gehäuse mit Zuführung und Abführung des zu untersuchenden Mediums, **dadurch gekennzeichnet, daß** die Oszillatorschaltungen mindestens jeweils ein veränderbares phasenschiebendes Bauelement enthalten, wobei der Phasenänderungsbereich so groß ist, daß bei laufendem Verstärker jeweils die Oszillation an- und abgeschaltet werden können.

2. Sensor nach Anspruch 1, **dadurch gekennzeichnet, daß** die schwingungsfähigen passiven Bauelemente Oberfächenwellen-Bauelementen (SAW) sind.

3. Sensor nach Anspruch 1, **dadurch gekennzeichnet, daß** die schwingungsfähigen passiven Bauelemente Schwingquarze sind.

4. Sensor nach Anspruch 1, **dadurch gekennzeichnet, daß** die schwingungsfähigen passiven Bauelemente LC-Glieder sind.

5. Sensor nach einem der Ansprüche 1 bis 4, **dadurch gekennzeichnet** das veränderbare phasenschiebende Bauelement ein LC-Tiefpaß π-Glied mit Kapazitätsdioden ist.

6. Sensor nach einem der Ansprüche 1 bis 5 **gekennzeichnet durch** eine Schaltung zur selektiven Ansteuerung der Kapazitätsdioden.

7. Sensor nach einem der Ansprüche 1 bis 6 **gekennzeichnet durch** einen Referenzoszillator zur Abwärtsmischung der Signale.

## Claims

1. Sensor comprising at least two oscillatory passive components, having associated oscillator circuits as measuring oscillators in a housing with supply and removal of the medium to be tested, **characterised in that** the oscillator circuits contain at least one variable phase-shifting component respectively, the phase-changing range being of such a size that, when the amplifier is operating, the oscillation can be switched on and off respectively.

2. Sensor according to claim 1, **characterised in that** the oscillatory passive components are surface acoustic wave components (SAW).

3. Sensor according to claim 1, **characterised in that** the oscillatory passive components are oscillating crystals.

4. Sensor according to claim 1, **characterised in that** the oscillatory passive components are LC modules.

5. Sensor according to one of the claims 1 to 4, **characterised in that** the variable phase-shifting component is an LC low-pass π-module with capacitance diodes.

6. Sensor according to one of the claims 1 to 5, **characterised by** a circuit for selective actuation of the capacitance diodes.

7. Sensor according to one of the claims 1 to 6, **characterised by** a reference oscillator for downstream mixing of the signals.

## Revendications

1. Détecteur constitué d'au moins deux composants passifs oscillatoires avec circuits correspondants d'oscillateurs en tant qu'oscillateurs de mesure dans un boîtier avec amenée et évacuation du fluide à analyser,
   **caractérisé en ce que**
   les circuits d'oscillateurs comprennent au moins respectivement un composant déphaseur variable, dont la plage de variation de phase est d'une dimension telle que, pendant le fonctionnement de l'amplificateur, l'oscillation peut être respectivement amorcée et arrêtée.

2. Détecteur selon la revendication 1,
   **caractérisé en ce que**
   les composants passifs oscillatoires sont des composants à ondes acoustiques de surface (SAW).

**3.** Détecteur selon la revendication 1,
**caractérisé en ce que**
les composants passifs oscillatoires sont des cristaux oscillateurs.

**4.** Détecteur selon la revendication 1,
**caractérisé en ce que**
les composants passifs oscillatoires sont des composants LC.

**5.** Détecteur selon l'une des revendications 1 à 4
**caractérisé en ce que**
le composant déphaseur variable est un composant $\pi$ passe-bas LC avec diodes à capacité.

**6.** Détecteur selon l'une des revendications 1 à 5,
**caractérisé par**
un circuit pour la commande sélective des diodes à capacité.

**7.** Détecteur selon l'une des revendications 1 à 6,
**caractérisé par**
un oscillateur de référence pour le mélange décroissant des signaux.

Fig. 1

Fig. 2

Fig. 3